# EUROPEAN PATENT SPECIFICATION

(11) **EP 3 352 273 B1**
(45) Date of publication and mention of the grant of the patent: **07.08.2024**
(21) Application number: 16846108.5
(22) Date of filing: 26.07.2016
(51) Int. Cl.: H01M 8/04029, H01M 8/04007, H01M 8/04992, H01M 8/0432, H01M 8/04701, H01M 8/04746, H01M 8/10

(54) **FUEL CELL AND CONTROL METHOD,**
BRENNSTOFFZELLE UND STEUERUNGSVERFAHREN
PILE À COMBUSTIBLE ET PROCÉDÉ DE COMMANDE

(30) Priority: 17.09.2015 JP 2015184505
(43) Date of publication of application: 25.07.2018
(73) Proprietor: Brother Kogyo Kabushiki Kaisha, Nagoya-shi, Aichi 467-8561 (JP)
(72) Inventor: IKOMA, Atsuki, Nagoya-shi Aichi 467-8561 (JP)
(74) Representative: Prüfer & Partner mbB Patentanwälte · Rechtsanwälte
(86) International application number: PCT/JP2016/071813
(87) International publication number: WO 2017/047235

(56) References cited:
- JP-A- 2002 100 383
- JP-A- 2002 117 876
- JP-A- 2003 168 461
- JP-A- 2005 108 458
- JP-A- 2008 147 121
- JP-A- 2009 187 703
- JP-A- 2012 104 313
- JP-B2- 5 033 327
- US-A1- 2004 224 201
- US-A1- 2009 317 692
- US-A1- 2010 291 451
- US-A1- 2011 212 375
- US-B1- 7 147 951

## Description

### [Technical Field]

The present invention relates to: a fuel cell, which is provided with a power generation unit configured to generate electricity by reacting hydrogen and oxygen, and a cooling passage configured to cool the power generation unit by circulation of cooling water; a control method of controlling heat exchange in a fuel cell; and a computer program for causing a computer to execute control processing of heat exchange.

### [Background Art]

Examples of a cell wherein hydrogen is sent to a negative electrode so that electromotive force is obtained include a fuel cell, a nickel-hydrogen cell and the like.

Since a fuel cell is a clean power generator having high power generation efficiency and it is possible with a fuel cell to construct a cogeneration system without being affected by the magnitude of the load, it is considered to use a fuel cell for various purposes including a personal computer, a digital household electric appliance such as a portable telephone, an electric car, a railroad, a base station of a portable telephone, a power plant and the like.

A fuel cell is provided with a stack, which is obtained by sandwiching a solid polymer electrolyte membrane with a negative electrode and a positive electrode from both sides so as to form a membrane electrode assembly, locating a pair of separators on both sides of the membrane electrode assembly so as to compose a platelike unit cell, and laminating and packaging a plurality of such unit cells. When hydrogen is supplied to the stack so that fuel gas including hydrogen comes into contact with the negative electrode of the stack and oxidation gas including oxygen such as air comes into contact with the positive electrode, an electrochemical reaction occurs on both electrodes and electromotive force is generated.

Since heat is generated at the stack during power generation, a fuel cell is generally provided with a cooling passage configured to cool the stack.

For example, cooling water in a cooling passage is guided into a cooling water communication passage of the stack by a water pump and flows through the cooling water communication passage while cooling the stack, and the heated cooling water is discharged from the stack as disclosed in Patent Literature 1. This cooling water having heat is subjected to heat exchange with a radiator and a radiator fan, and the cooled cooling water is returned to the stack by the water pump and is then circulated.

A fuel cell of Patent Literature 1 is constructed to lower the temperature in a housing of the fuel cell by increasing the fan speed of the radiator fan so as to guide outside air into the housing for the purpose of ventilation and cooling when the temperature in the housing is equal to or higher than a predetermined value. The fuel cell is also constructed in a manner such that a three-way selector valve is switched over so that cooling water bypasses a passage to the radiator when the temperature of the cooling water is lower than a predetermined value.

### [Citation List]

### [Patent Literature]

Patent Literature 1: Japanese Patent Application Laid-Open No. 2003-168461
Patent Literature 2: JP 2009 187703 A
Patent Literature 3: JP 5 033327 B2
Patent Literature 4: US 2010/291451 A1
Patent Literature 5: US 7 147 951 B1
Patent Literature 6: JP 2002 100 383 A
Patent Literature 7: JP 2002 117876 A
Patent Literature 8: US 2004/224201 A1
Patent Literature 9: JP 2003 168461 A
Patent Literature 10: JP 2012 104313 A
Patent Literature 11: JP 2008 147121 A
Patent Literature 12: JP 2005 108458 A
Patent literature 13: US 2009/0317692 A1
Patent Literature 14 US 2011/212375 A1.

### [Summary of Invention]

### [Technical Problem]

In the case of a fuel cell of Patent Literature 1 wherein a cooling passage is constituted of only one path, it is necessary to use the same refrigerant and therefore it is impossible to use different refrigerants between the stack (heat generation unit) side and the radiator (heat radiation unit) side. Accordingly, in a case where the stack corresponds only to pure water, there is a problem that only pure water can be used and therefore only SUS or the like wherein the elution amount of metal ions is small can be used as the material of the parts of the path in the radiator or the like.

Patent Literature 2 discloses a fuel cell having a cooling passage through which a refrigerant flows, a main cooling circuit that cools the fuel cell by flowing the refrigerant through the cooling passage of the fuel cell and flows through the main cooling circuit that is branched from the main cooling circuit, a branch circuit for flowing a part of the refrigerant and returning it to the main cooling circuit, and a refrigerant processing unit that is provided in the branch circuit and processes the refrigerant so as to reduce the electrical conductivity of the refrigerant flowing through the branch circuit.

Patent Literature 3, or similarly Patent Literature 14, discloses a power supply system for supplying power supplied based on the generated power of the fuel cell to the power load, a primary circuit for circulating cooling water flowing through the cooling unit for cooling the heat generation of the fuel cell to the primary side of the heat exchanging unit, a heat supply system provided with a secondary circuit for supplying heated heat water to a heat load obtained by circulating hot water to a secondary side of the heat exchange unit and an electric heating unit using surplus power of the supplied power. Furthermore, in the Patent Literature 14, in an embodiment the abnormal shut-down process followed by abnormality detection of the hydrogen generator, the first pump and the second pump are stopped to stop the exhaust heat recovery operation of the fuel cell when the cooling rate becomes substantially equal to that in the normal shut-down process.

Patent Literature 4 discloses a fuel cell system comprising a fuel cell, a first heat medium path through which a first heat medium for cooling the fuel cell flows, a first flow control device configured to flow the first heat medium in the first heat medium path, an abnormality detector configured to detect an abnormality, and a controller configured to control the first flow control device such that the fuel cell after shut-down of power generation is cooled with a higher rate in an abnormal shut-down process performed after the abnormality detector detects the abnormality, than in a normal shut-down process.

Patent Literature 5 discloses a cogeneration apparatus including a polymer electrolyte fuel cell that generates electric power using a fuel gas and oxidizing gas, an internal circulation circuit that circulates an internal heat transport medium into the fuel cell, internal circulating means of circulating the internal heat transport medium, first heat exchanging means of exchanging heat of the internal heat transport medium with an external heat transport medium, a fuel cell main unit that incorporates the fuel cell, the internal circulation circuit, the internal circulating means and the first heat exchanging means, and heat utilizing means of utilizing heat of the external heat transport medium heat-exchanged by the first heat exchanging means through waste heat collecting pipes.

Patent Literature 6 discloses a cooling system that circulates and supplies the coolant of the fuel cell to cool the fuel cell, a circulation pump that circulates the coolant, a heat exchanger that cools the coolant discharged from the fuel cell. The coolant circuit comprises an ion exchanger using an ion exchange resin that removes ions therein, and a flow rate adjusting unit that adjusts the flow rate of the coolant flowing into the ion exchanger to be constant.

Patent Literature 7 discloses a cooling device for a fuel cell with a primary coolant flow path for allowing a primary coolant to circulate between the fuel cell and a liquid-liquid primary heat exchanger, the primary heat exchanger and a gas-liquid secondary heat exchanger. A secondary coolant flow path allows the secondary coolant to circulate between, and the primary coolant flow path is provided with an ion exchanger that adsorbs the eluted ions in the primary coolant.

Patent Literature 8 discloses a liquid-cooled fuel cell system including a fuel cell stack and a cooling subsystem for cooling the fuel cell stack, the cooling subsystem including a liquid coolant and a circulation loop for circulating the liquid coolant in thermal contact with fuel cells in the stack, and the liquid coolant including a glycol solvent.

Patent Literature 9 discloses a ventilation method of a fuel cell system for cooling a fuel cell main body disposed in a package. It contains a refrigerant heat-exchanged by a radiator and a radiator fan, wherein the temperature in the package is lowered by controlling the rotational drive of a fan and introducing outside air into the package for ventilation.

Patent Literature 10 discloses a fuel cell that supplies fuel and an oxidant to generate power, a fuel cell cooling unit that cools the fuel cell, an oxidant supply pump that supplies an oxidant to the fuel cell, and a fuel cell cooling unit that controls the fuel cell. The fuel cell cooling means operates in synchronism with the refrigerant flow path through which the refrigerant that cools the fuel cell flows, and the oxidant supply pump, and the refrigerant flows into the refrigerant flow path.

Patent Literature 11 discloses a fuel cell evaluation device that manages the temperature of a fuel cell by a coolant circulation system and evaluates the performance of the fuel cell, the coolant circulation system comprising: flow rate adjusting means for adjusting a flow rate of the coolant flowing through the fuel cell, a heating unit that adjustably heats the cooling liquid, and a heat dissipating unit that is provided between the heating unit and the fuel cell and that radiates heat of the cooling liquid in an adjustable manner.

Patent Literature 12 discloses a fuel cell temperature adjusting device that adjusts the temperature of a fuel cell disposed under a vehicle floor, a cooling water circuit that distributes cooling water for cooling the fuel cell to a heat exchanger installed in a motor room in front of the vehicle, a bypass circuit connected to the cooling water circuit and bypassing the heat exchanger, and a cooling water pump provided in the cooling water circuit between the fuel cell and the bypass circuit for circulating the cooling water. Patent literature 13 discloses a ventilator of fuel-cell vehicles for ventilating hydrogen in the hydrogen-system unit area arranging a hydrogen circulating device in the fuel-cell vehicles boarding the fuel cell. The ventilator of fuel-cell vehicle includes a first ventilating device for taking ventilating air in from a front side of the fuel-cell vehicle to hydrogen-system unit area arranging the fuel cell, the hydrogen supply device, and the hydrogen exhaust device in the center of front and rear direction of the fuel-cell vehicle; and a second ventilating device for sucking the ventilating air taken in from the rear end of vehicle body of the fuel-cell vehicle to the hydrogen-system unit area.
When a metal ion is generated in the cooling passage while power generation is continued, there arises a problem that the metal ion causes rise in the conductivity of cooling water, lowering of the power generation efficiency of the stack, and shortening of the life. An impurity such as a metal ion is generated mainly in the radiator. In order to remove such a metal ion or the like, it is necessary to compose the parts of the cooling passage with SUS or the like, or to regularly perform maintenance such as replacement of refrigerant or ion exchange resin.

The present invention has been made in view of such circumstances, and the object thereof is to provide: a fuel cell by which the level of contamination of the cooling passage becomes lower, and lowering of the power generation efficiency of the power generation unit due to rise in the conductivity of the heat medium is suppressed; a control method of controlling heat exchange in the fuel cell; and a computer program for causing a computer to execute control processing of heat exchange.

### [Solution to Problem]

A fuel cell according to an aspect of the present disclosure is according to claim 1 ind in particular comprises: a power generation unit cooling passage configured to cool a power generation unit, which generates electricity by reacting hydrogen and oxygen, by circulation of a first heat medium; a radiator flow passage, which allows a second heat medium to flow through a radiator and circulate; a first circulation pump provided at the power generation unit cooling passage; a second circulation pump provided at the radiator flow passage; and a heat exchanger configured to perform heat exchange between the first heat medium and the second heat medium.

A control method according to an aspect of the present disclosure of controlling heat exchange in a fuel cell is depicted in claim 4. It is in particular provided with a power generation unit cooling passage that allows a first circulation pump to circulate a first heat medium so as to cool a power generation unit configured to generate electricity by reacting hydrogen and oxygen, a radiator flow passage that allows a second circulation pump to circulate a second heat medium configured to conduct heat generated by the power generation unit to a radiator, a heat exchanger configured to perform heat exchange between the first heat medium and the second heat medium, and a fan configured to cool the radiator, perform ventilation of a housing of the cell body, and dilute and discharge hydrogen if hydrogen leaks, and a hydrogen sensor configured to detect leakage of hydrogen, is characterized by comprising: acquiring temperature of the first heat medium on an inlet side of the power generation unit or temperature of the first heat medium on an outlet side of the power generation unit; and controlling output of the first circulation pump or the second circulation pump on the basis of temperature of the first heat medium on the inlet side or the outlet side, and continuing rotating the fan and stopping the first circulation pump and the second circulation pump if the hydrogen sensor detects leakage of hydrogen.

A computer program according to an aspect of the present disclosure is in particular characterized by causing a computer, which controls heat exchange in a fuel cell provided with a power generation unit cooling passage that allows a first circulation pump to circulate a first heat medium so as to cool a power generation unit configured to generate electricity by reacting hydrogen and oxygen, a radiator flow passage that allows a second circulation pump to circulate a second heat medium configured to conduct heat generated by the power generation unit to a radiator, and a heat exchanger configured to perform heat exchange between the first heat medium and the second heat medium, to execute processing of: acquiring temperature of the first heat medium on an inlet side of the power generation unit or temperature of the first heat medium on an outlet side of the power generation unit; and controlling output of the first circulation pump or the second circulation pump on the basis of temperature of the first heat medium on the inlet side or the outlet side.

### [Advantageous Effects of Invention]

With the present invention provided with a power generation unit cooling passage through which a first heat medium circulates, a radiator flow passage through which a second heat medium circulates, and a heat exchanger configured to perform heat exchange between the first heat medium and the second heat medium, a cooling passage is divided between the power generation unit side and the radiator side, and each of the power generation unit cooling passage and the radiator flow passage has a simple structure and a small length. Accordingly, the area of a pollution source such as piping becomes smaller, the level of contamination of the first heat medium and the second heat medium becomes lower, lowering of the power generation efficiency of the power generation unit due to rise in the conductivity of the heat medium caused by metal ions or the like is suppressed, and shortening of the life of the power generation unit is suppressed.

### [Brief Description of Drawings]

[FIG. 1] A block diagram illustrating a fuel cell according to Embodiment 1.
[FIG. 2] A flowchart illustrating control processing of a stack cooling passage by a CPU.
[FIG. 3] A flowchart illustrating control processing of a radiator flow passage by a CPU.
[FIG. 4] A block diagram illustrating a fuel cell according to Embodiment 2.

### [Description of Embodiments]

The following description will explain the present invention in detail with reference to the drawings illustrating some embodiments thereof.

### Embodiment 1

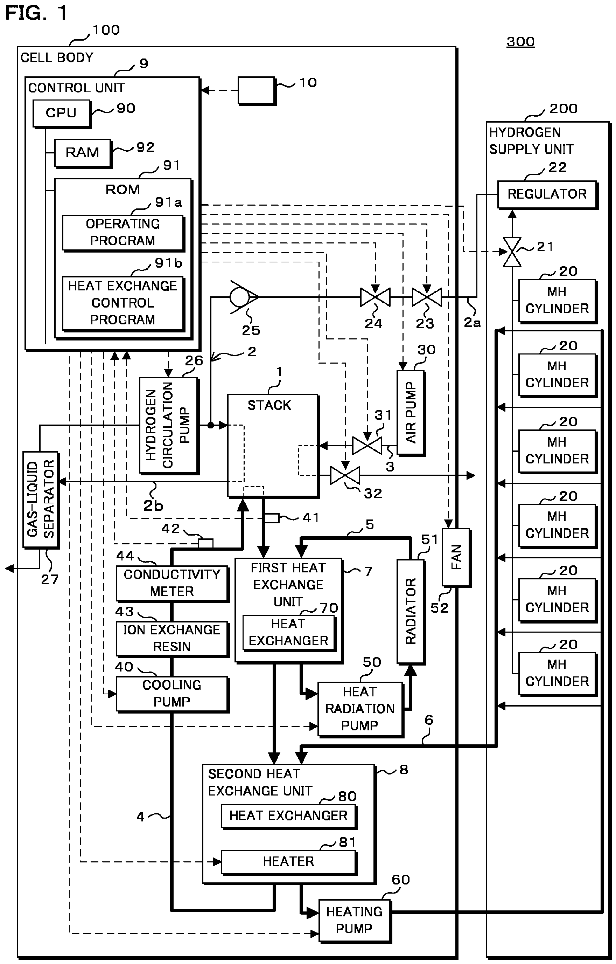

FIG. 1 is a block diagram illustrating a fuel cell 300 according to Embodiment 1.

The fuel cell 300 is a fuel cell such as a polymer electrolyte fuel cell, for example.

The fuel cell 300 is provided with a cell body 100 and a hydrogen supply unit 200.

The cell body 100 is provided with a stack 1, a hydrogen conduction passage 2 (a hydrogen supply passage 2a and a hydrogen circulation passage 2b), an air flow passage 3, a stack cooling passage 4, a radiator flow passage 5, a cylinder heating passage 6, a first heat exchange unit 7, a second heat exchange unit 8, a control unit 9, a hydrogen detection sensor 10, a gas-liquid separator 27, a hydrogen circulation pump 26, an air pump 30, a cooling pump 40, a heat radiation pump 50, a radiator 51, a fan 52 and a heating pump 60.

The hydrogen supply passage 200 is provided with a plurality of MH (Metal Hydride) cylinders 20, an on-off valve 21 and a regulator 22. Each MH cylinder 20 is filled with hydrogen storage alloy. The on-off valve 21 is connected with all MH cylinders 20 and is also connected with the regulator 22. The supply pressure of hydrogen is adjusted by the regulator 22. A reaction that the hydrogen storage alloy in the MH cylinders 20 releases hydrogen is an endothermic reaction.

The stack 1 is obtained by sandwiching a solid polymer electrolyte membrane with a negative electrode and a positive electrode from both sides so as to form a membrane electrode assembly, locating a pair of separators on both sides of the membrane electrode assembly so as to compose a platelike unit cell, and laminating and packaging a plurality of such unit cells.

When fuel gas including hydrogen, which has flown in from the hydrogen supply unit 200, comes into contact with the negative electrode and oxidation gas including oxygen such as air flows in from the air flow passage 3 and comes into contact with the positive electrode, an electrochemical reaction occurs on both electrodes and electromotive force is generated. In this electrochemical reaction, water is generated from a reaction between a hydrogen ion, which has been transmitted through the solid polymer electrolyte membrane from the negative electrode side, and oxygen in oxidation gas.

One end part of the hydrogen supply passage 2a is connected with the regulator 22, and the other end part is connected with a part, which is close to the negative electrode of the stack 1, of the hydrogen circulation passage 2b. The hydrogen supply passage 2a is provided with an on-off valve 23, an on-off valve 24 and a check valve 25, which are positioned in this order from the hydrogen supply unit 200 side. The hydrogen circulation pump 26 is provided at the hydrogen circulation passage 2b. The fuel cell 300 is constructed in a manner such that, when the on-off valve 23 and the on-off valve 24 are opened, hydrogen flows from the regulator 22 through the on-off valve 23, the on-off valve 24, the check valve 25 and the hydrogen supply passage 2a, is caused by the hydrogen circulation pump 26 to flow through the hydrogen circulation passage 2b, is sent out to a negative electrode side part of the stack 1, and is caused to flow through a conduction passage in this part. Hydrogen, which has flown through the conduction passage and is discharged from the stack 1, flows through the hydrogen circulation passage 2b and is sent to the gas-liquid separator 27. In the gas-liquid separator 27, the hydrogen is separated into gas, which includes hydrogen and impurities, and water, and hydrogen obtained by the separation is sent from the gas-liquid separator 27 to the hydrogen circulation pump 26 and is then circulated. Water obtained by the separation at the gas-liquid separator 27 is discharged to outside by opening a drain valve (unillustrated), and gas including impurities is discharged to outside by opening an exhaust valve (unillustrated) at a proper timing.

The air pump 30 is provided at the air flow passage 3. In addition, an on-off valve 31 is provided at an inlet side part of the air flow passage 3 to the stack 1, and an on-off valve 32 is provided at an outlet side part from the stack 1. The fuel cell 300 is constructed in a manner such that, when the on-off valve 31 and the on-off valve 32 are opened, air sent out from the air pump 30 flows through the air flow passage 3 and the on-off valve 31, is guided into a positive electrode side part of the stack 1, and flows through a conduction passage of this part. Air, which has flown through the conduction passage, is discharged from the stack 1, and is discharged through the on-off valve 32 to outside.

A cooling pump 40, an ion exchange resin 43 and a conductivity meter 44 are provided at the stack cooling passage 4. The fuel cell 300 is constructed in a manner such that cooling water, which is sent out from the cooling pump 40 and flows through the stack cooling passage 4, flows through the ion exchange resin 43, the conductivity of the cooling water is measured by the conductivity meter 44, and the cooling water is then guided into the stack 1, flows through a conduction passage in the stack 1, is then discharged, flows through the first heat exchange unit 7 and the second heat exchange unit 8, and returns to the cooling pump 40. Temperature sensors 41 and 42 are provided respectively at an outlet side of cooling water of the stack cooling passage 4 from the stack 1 and at an inlet side to the stack 1. The temperature sensors 41 and 42 respectively detect temperatures T₁°C and T₂°C. The ion exchange resin 43 adsorbs ions included in cooling water, which flows through the stack cooling passage 4. When the ion content becomes high, the conductivity of cooling water becomes high and the power generation efficiency of the stack 1 lowers, and it is therefore necessary to cause the ion exchange resin 43 to adsorb metal ions or the like.

In a case where a stack 1 which can use only pure water as refrigerant is employed, pure water (cooling water) is used as a heat medium (a first heat medium) of the stack cooling passage 4. In a case where antifreeze liquid composed mainly of ethylene glycol, for example, can be used as refrigerant of the stack 1, the first heat medium is the antifreeze liquid.

The first heat exchange unit 7 is provided with a heat exchanger 70, and the second heat exchange unit 8 is provided with a heat exchanger 80 and a heater 81.

The heat radiation pump 50 is provided at the radiator flow passage 5. The fuel cell 300 is constructed in a manner such that heat radiation liquid sent out from the heat radiation pump 50 flows through the radiator 51, further flows through the heat exchanger 70 of the first heat exchange unit 7, and then returns to the heat radiation pump 50. Here, an example of heat radiation liquid (a second heat medium) is antifreeze liquid composed mainly of ethylene glycol, for example. Water may also be used as the heat radiation liquid. Since antifreeze liquid includes various chemical agents such as a rust-preventive agent, the parts such as the radiator 51 of the radiator flow passage 5 hardly rust. Moreover, a hole is hardly formed in a case where a radiator 51 made of aluminum is employed. In addition, freezing does not occur in the radiator flow passage 5 even when the outside air temperature is below the freezing point.

The fan 52 is provided in proximity to the radiator 51.

The heating pump 60 is provided at the cylinder heating passage 6. The fuel cell 300 is constructed in a manner such that heating liquid sent out from the heating pump 60 flows through a conduction passage in the hydrogen supply unit 200 while heating each MH cylinder 20, is then discharged from the hydrogen supply unit 200, flows through the second heat exchange unit 8, and returns to the heating pump 60. Hydrogen is released from the hydrogen storage alloy in each MH cylinder 20 by heating. An example of heating liquid is the antifreeze liquid.

The stack cooling passage 4, the radiator flow passage 5, the cylinder heating passage 6, the first heat exchange unit 7 and the second heat exchange unit 8 are covered with heat insulating material.

Accordingly, it is possible to restrict heat transfer with outside, and it is easy to control the heat quantity.

The control unit 9 is provided with a CPU (Central Processing Unit) 90 configured to control operations of the respective components of the control unit 9, and the CPU 90 is connected with a ROM 91 and a RAM 92 via a bus.

The ROM 91 is a nonvolatile memory such as an EEPROM (Electrically Erasable Programmable ROM), and stores an operating program 91a of the fuel cell 300, and a heat exchange control program 91b according to this embodiment.

Moreover, the heat exchange program 91b may be recorded on a recording medium such as a CD (Compact Disc)-ROM, which is a portable medium for computer-readable recording, a DVD (Digital Versatile Disc)-ROM, a BD (Blu-ray (registered trademark) Disc), a hard disc drive or a solid-state drive, so that the CPU 91 reads out the heat exchange program 91b from the recording medium and stores the heat exchange program 91b in the ROM 91.

Furthermore, the heat exchange program 91b according to the present invention may also be acquired from an unillustrated external computer, which is connected with a communication network, and be stored in the ROM 91.

The RAM 92 is a memory such as a DRAM (Dynamic RAM) or an SRAM (Static RAM), and temporarily stores the operating program 91a, which is read out from the ROM 90 in the process of execution of arithmetic processing by the CPU 91, the heat exchange program 91b, and various data, which are generated in arithmetic processing by the CPU 90.

The control unit 9 is connected with the respective components of the cell body 100, and the on-off valve 21 of the hydrogen supply unit 200, and the control unit 9 controls operations of the respective components and the on-off valve 21.

The hydrogen detection sensor 10 outputs a detection signal to the control unit 9 when the hydrogen detection sensor 10 detects hydrogen leakage.

A reaction, which occurs at the stack 1, is an exothermic reaction, and the stack 1 is cooled by cooling water, which flows through the stack cooling passage 4. Heat of cooling water, which has been discharged from the stack 1, is conducted to heat radiation liquid at the heat exchanger 70, the heat radiation liquid radiates heat at the radiator 51, and heat is radiated to outside of the cell body 100 by the fan 52. Heat radiation liquid, which has been cooled at the radiator 51, is sent to the first heat exchange unit 7.

Heat of cooling water, which has flown through the first heat exchange unit 7 and has been guided into the second heat exchange unit 8 in the stack cooling passage 4, is conducted to heating liquid at the second heat exchange unit 8, and the heating liquid heats each MH cylinder 20 of the hydrogen supply unit 200, and releases hydrogen from the hydrogen storage alloy.

Cooling water, which has been cooled at the second heat exchange unit 8, returns to the cooling pump 40, and is sent to the stack 1.

Although the temperature of cooling water in the stack cooing passage 4 becomes the environmental temperature when power generation is not performed, it is possible to maintain each MH cylinder 20 at a predetermined temperature by heating the heating liquid with the heater 81 of the second heat exchange unit 8.

It is to be noted that it is also possible to send air, which has heat generated at the stack 1, to the hydrogen supply unit 200 so as to heat each MH cylinder 20, without providing the cylinder heating passage 6.

In this embodiment, the fuel cell 300 according to Embodiment 1 having the above structure is used to acquire a temperature T₁ of cooling water detected by the temperature sensor 41 on the outlet side of the stack 1, or a temperature T₂ of cooling water detected by the temperature sensor 42 on the inlet side of the stack 1, control output of the cooling pump 40 or the heat radiation pump 50 on the basis of such a temperature so as to control heat exchange, and control cooling of the stack 1 and heat radiation to outside.

The CPU 90 of the control unit 9 reads out the heat exchange control program from the ROM 91, and executes control processing of heat exchange.

The following description will explain control processing of heat exchange.

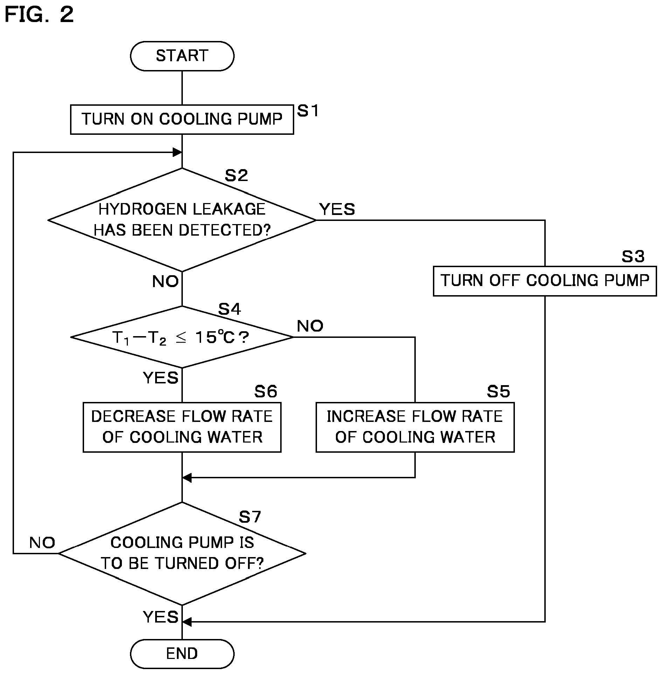

FIG. 2 is a flowchart illustrating control processing of the stack cooling passage 4 by the CPU 90.

First, the CPU 90 turns on the cooling pump 40 (S1).

The CPU 90 determines whether hydrogen leakage has been detected by the hydrogen detection sensor 10 or not (S2).

When determining that hydrogen leakage has been detected (S2: YES), the CPU 90 turns off the cooling pump 40 (S3), stops supply of hydrogen from the hydrogen supply unit 200, and terminates control processing of the stack cooling passage 4.

When determining that hydrogen leakage has not been detected (S2: NO), the CPU 90 determines whether a difference (T₁-T₂) between temperatures T₁°C and T₂°C acquired from the temperature sensors 41 and 42 is equal to or lower than 15°C or not (S4).

When determining that the difference is higher than 15°C (S4: NO), the CPU 90 raises an indication voltage to the cooling pump 40, increases the flow rate of cooling water to be sent out from the cooling pump 40 (S5), and advances the processing to step S7. Increase in the flow rate of cooling water achieves temperature lowering of the stack 1.

When determining that the difference is equal to or lower than 15°C (S4: YES), the CPU 90 lowers an indication voltage to the cooling pump 40, and decreases the flow rate of cooling water to be sent out from the cooling pump 40 (S6). This can prevent overcooling of the cooling water.

The CPU 90 determines whether the cooling pump 40 is to be turned off or not (S7). An example of a case where it is determined that the cooling pump 40 is to be turned off is a case where an instruction from a worker to stop power generation is accepted or the like.

When determining that the cooling pump 40 is to be turned off (S7: YES), the CPU 90 terminates control processing of the cooling passage 4.

When determining that the cooling pump 40 is not to be turned off (S7: NO), the CPU 90 returns the processing to step S2.

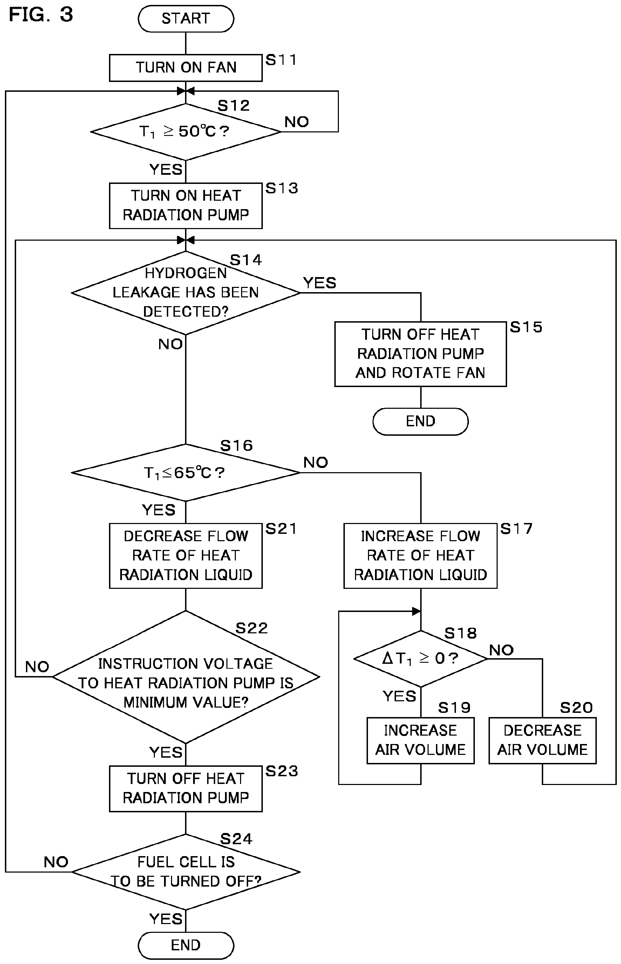

FIG. 3 is a flowchart illustrating control processing of the radiator flow passage 5 by the CPU 90.

First, the CPU 90 turns on the fan 52 (S11). Here, the fan speed of the fan 52 is a minimum fan speed required for ventilation.

The CPU 90 determines whether the temperature T₁°C acquired from the temperature sensor 41 satisfies T₁ ≥ 50°C or not (S12).

When determining that T₁ ≥ 50°C is not satisfied (S12: NO), the CPU 90 repeats the determination processing.

When determining that T₁ ≥ 50°C is satisfied (S12: YES), the CPU 90 turns on the heat radiation pump 50 (S13).

The CPU 90 determines whether hydrogen leakage has been detected by the hydrogen detection sensor 10 or not (S14).

When determining that hydrogen leakage has been detected (S14: YES), the CPU 90 turns off the heat radiation pump 50 (S15), stops supply of hydrogen from the hydrogen supply unit 200, and terminates control processing of the radiator flow passage 5. At this time, rotation of the fan 52 is continued.

When determining that hydrogen leakage has not been detected (S14: NO), the CPU 90 determines whether the temperature T₁°C acquired from the temperature sensor 41 satisfies T₁ ≤ 65°C or not (S16).

When determining that T₁ ≤ 65°C is not satisfied (S16: NO), the CPU 90 raises an instruction voltage to the heat radiation pump 50, and increases the flow rate of heat radiation liquid to be sent out from the heat radiation pump 50 (S17). This increases the heat radiation amount, further cools the cooling water, and achieves further cooling of the stack 1.

The CPU 90 determines whether a variation ΔT₁ of the temperature T₁ acquired from the temperature sensor 41 for ten seconds satisfies ΔT₁ ≥ 0 or not (S18). It is to be noted that the variation ΔT₁ of T₁ may be obtained every twenty seconds.

When determining that ΔT₁ ≥ 0 is not satisfied (S18: NO), the CPU 90 decreases the fan speed of the fan 52 so as to decrease the air volume (S20), and returns the processing to step S14. Since T₁ is lower, the heat radiation amount is lowered by decreasing the air volume of the fan 52.

When determining that ΔT₁ ≥ 0 is satisfied (S18: YES), the CPU 90 increases the fan speed of the fan 52 so as to increase the air volume (S19), and returns the processing to step S18. Since T₁ is higher, the heat radiation amount is raised by increasing the air volume of the fan 52.

When determining in step S16 that T₁ ≤ 65°C is satisfied (S16: YES), the CPU 90 lowers an instruction voltage to the heat radiation pump 50, and decreases the flow rate of heat radiation liquid to be sent out from the heat radiation pump 50 (S21).

The CPU 90 determines whether an instruction voltage to the heat radiation pump 50 is the minimum value or not (S22).

When determining that the instruction voltage to the heat radiation pump 50 is not the minimum value (S22: NO), the CPU 90 returns the processing to step S14.

When determining that the instruction voltage to the heat radiation pump 50 is the minimum value (S22: YES), the CPU 90 turns off the heat radiation pump 50 (S23). Since the instruction voltage converges to the minimum value by repeating lowering of the heat radiation amount, driving of the heat radiation pump 50 is stopped.

The CPU 90 determines whether the entire system of the fuel cell 300 is to be turned off or not (S24). An example of a case where the entire system is to be turned off is a case where an instruction from a worker to stop power generation is accepted or the like.

When determining that the entire system of the fuel cell 300 is not to be turned off (S24: NO), the CPU 90 returns the processing of the radiator flow passage 5 to step S12.

When determining that the entire system of the fuel cell 300 is to be turned off (S24: YES), the CPU 90 terminates the processing.

It is to be noted that the thresholds of the temperature are not limited to the above values in the flowcharts of FIGS. 2 and 3.

In this embodiment, the cooling passage is divided between the stack 1 side and the radiator 51 side, and each of the stack cooling passage 4 and the radiator flow passage 5 has a simple structure and a small length. Accordingly, the area of a pollution source such as piping becomes smaller, the level of contamination of the first heat medium and the second heat medium becomes lower, lowering of the power generation efficiency of the stack 1 due to rise in the conductivity caused by metal ions or the like is suppressed, and shortening of the life of the stack 1 is suppressed.

In addition, since the cooling passage is divided into two paths, it is possible to use pure water in a case where antifreeze liquid cannot be used as the first heat medium on the stack 1 side, and use antifreeze liquid as the second heat medium on the radiator 51 side. Since antifreeze liquid includes various chemical agents such as a rust-preventive agent, the parts of the radiator flow passage 5 hardly rust, and generation of metal ions is suppressed. Accordingly, it is unnecessary to use SUS or the like wherein the elution amount of metal ions is small as the material of the path parts such as the radiator 51 of the radiator flow passage 5 and aluminum can be used, and therefore cost down is achieved.

In a conventional fuel cell such as Patent Literature 1 wherein cooling water circulates between a stack and a radiator, it is necessary to control both of the flow rate of cooling water required for cooling and the air volume of a fan configured to cool a radiator at the same time. In addition, it is also necessary to secure an air volume of the fan equal to or larger than a predetermined value for ventilation of a housing, and therefore it is difficult to use a common fan as a fan for housing ventilation and a radiator fan having a small air volume.

In this embodiment, it is possible to control the heat radiation amount by only controlling the flow rate of the radiator flow passage 5 (the heat radiation unit side) without depending on the flow rate of the stack cooling passage 4 (the heat generation unit side). Accordingly, it is possible to control the flow rate of the radiator flow passage 5 so as to control the heat radiation amount while securing a minimum required ventilation volume of a housing of the cell body 100 of the fuel cell 300. It is therefore possible to provide the fan 52 with both functions of radiation of heat from the radiator 51 and ventilation of the housing of the cell body 100. In addition, it is also possible to stop the entire system of the fuel cell 300 and to dilute and discharge hydrogen when hydrogen leaks.

In this embodiment, it is possible to control the heat quantity, which is transferred in the first heat exchange unit 7, by controlling outputs of the cooling pump 40 and the heat radiation pump 50, that is, the circulation volume. Since the heat quantity taken at the first heat exchange unit 7 increases as the circulation volume of the radiator flow passage 5 becomes larger, it is possible to finely control the heat quantity by suitably combining outputs of the two pumps.

In addition, since it is possible to manage the temperature difference of cooling water between the input side and the output side of the stack 1, it is possible to stabilize the temperature of the stack 1 even under low-temperature environment by decreasing the heat radiation amount or the like.

In addition, in this embodiment, the heat quantity taken at the first heat exchange unit 7 is restricted and overcooling of the cooling water is prevented by decreasing the output of the heat radiation pump 50.

### Embodiment 2

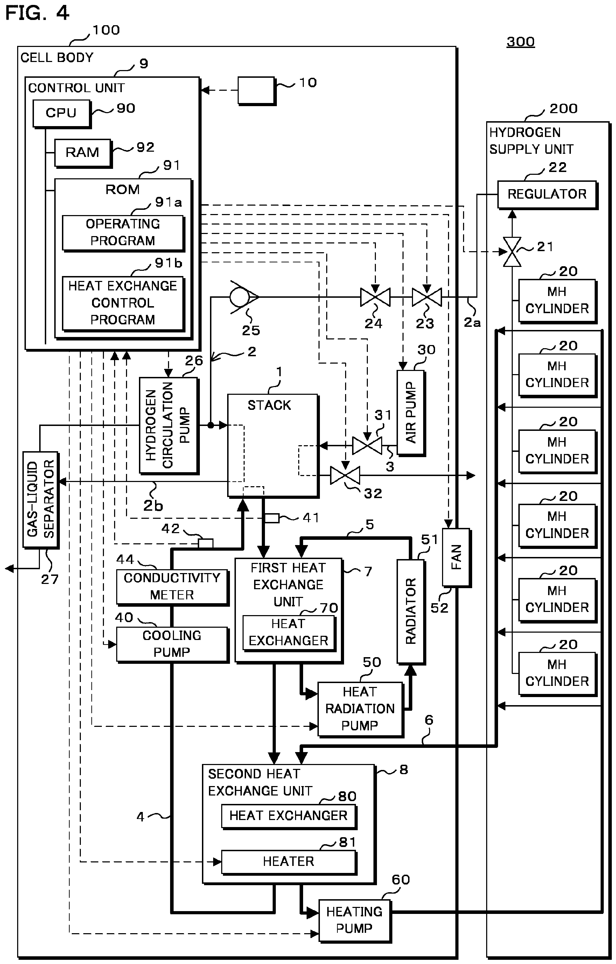

FIG. 4 is a block diagram illustrating a fuel cell according to Embodiment 2. A fuel cell 301 according to Embodiment 2 has a structure similar to the fuel cell 300 according to Embodiment 1 except that a cell body 100 of the fuel cell 301 is not provided with an ion exchange resin 43.

In this embodiment, the cooling passage is divided into a stack cooling passage 4 and a radiator flow passage 5, and impurities such as metal ions generated at a radiator 51 do not flow through the stack cooling passage 4.

Accordingly, it is possible to omit ion exchange resin at the stack cooling passage 4.

This achieves cost down of the fuel cell 301 itself.

As mentioned above, a fuel cell according to an aspect of the present disclosure is characterized by comprising: a power generation unit cooling passage configured to cool a power generation unit, which generates electricity by reacting hydrogen and oxygen, by circulation of a first heat medium; a radiator flow passage, which allows a second heat medium to flow through a radiator and circulate; a first circulation pump provided at the power generation unit cooling passage; a second circulation pump provided at the radiator flow passage; and a heat exchanger configured to perform heat exchange between the first heat medium and the second heat medium.

In the aspect, the cooling passage is divided between the power generation unit side and the radiator side, and each of the power generation unit cooling passage and the radiator flow passage has a simple structure and a small length. Accordingly, the area of a pollution source such as piping becomes smaller, the level of contamination of the first heat medium and the second heat medium becomes lower, lowering of the power generation efficiency of the power generation unit due to rise in the conductivity caused by metal ions or the like is suppressed, and shortening of the life of the power generation unit is suppressed.

In addition, since the cooling passage is divided into two paths, it is possible to use pure water in a case where antifreeze liquid cannot be used as the first heat medium on the power generation unit side, and use antifreeze liquid as the second heat medium on the radiator side. In such a case, it is unnecessary to use SUS or the like wherein the elution amount of metal ions is small as the material of the path parts such as the radiator of the radiator flow passage, and aluminum can be used.

Moreover, in this aspect, it is possible to control the heat radiation amount by only controlling the flow rate of the radiator flow passage without depending on the flow rate of the power generation unit cooling passage side. Accordingly, it is possible to control the flow rate of the radiator flow passage so as to control the heat radiation amount while securing a minimum required ventilation volume of (a housing of) the fuel cell. It is therefore possible to use a common fan as a fan for a housing and a radiator fan.

In the fuel cell, the second heat medium is antifreeze liquid.

Since the second heat medium in the aspect is antifreeze liquid including various chemical agents such as a rust-preventive agent, the parts of the radiator flow passage hardly rust. Moreover, a hole is hardly formed in a case where a radiator made of aluminum is employed. In addition, freezing does not occur in the radiator flow passage even when the outside air temperature is below the freezing point.

The fuel cell according to another aspect of the present disclosure further comprises a fan configured to cool the radiator, perform ventilation, and dilute and discharge hydrogen if hydrogen leaks.

In the aspect, it is possible to provide one fan with three functions, and cost down is achieved.

In the fuel cell, the fan rotates when the power generation unit is generating electricity.

In the aspect, it is possible to immediately dilute and discharge hydrogen when hydrogen leaks.

The fuel cell according to another aspect of the present disclosure further comprises a hydrogen sensor configured to detect leakage of hydrogen, wherein the fan continues rotating and the first circulation pump and the second circulation pump stop if the hydrogen sensor detects leakage of hydrogen.

In the aspect, it is possible to stop the entire system of the fuel cell so as to stop supply of hydrogen and to dilute hydrogen, which has leaked, and discharge the hydrogen to outside when hydrogen leaks.

The fuel cell according to another aspect of the present disclosure further comprises: a first temperature detector configured to detect temperature of the first heat medium on an inlet side of the power generation unit; and a second temperature detector configured to detect temperature of the first heat medium on an outlet side of the power generation unit, wherein the fuel cell is constructed in a manner such that output of the first circulation pump or the second circulation pump is controlled on the basis of temperature detected by the first temperature detector or the second temperature detector.

In the aspect, it is possible to control the heat quantity, which is transferred in a heat exchanger, by controlling outputs of the two circulation pumps, that is, the circulation volume on the basis of the temperature. Since the heat quantity taken at a heat exchanger increases as the circulation volume of the radiator flow passage becomes larger, it is possible to finely control the heat quantity by suitably combining outputs of the two pumps.

A fuel cell of Patent Literature 1 is constructed in a manner such that cooling water bypasses a passage to the radiator when the temperature of the cooling water is lower than a predetermined value, and a time lag is generated by a three-way selector valve between a closed loop and a radiator passage in such a case. On the contrary, no time lag is generated in the case of the present invention.

In addition, since it is possible to manage the temperature difference of cooling water between the input side and the output side of the power generation unit, it is possible to stabilize the temperature of the power generation unit even under low-temperature environment.

The fuel cell according to another aspect of the present disclosure is constructed in a manner such that output of the second circulation pump is decreased if the temperature of the first heat medium detected by the second temperature detector is equal to or lower than a predetermined value.

In the aspect, the heat quantity taken at a heat exchanger is restricted and overcooling of the cooling water is prevented by decreasing the output of the second circulation pump.

In the fuel cell, the power generation unit cooling passage, the heat exchanger and the radiator flow passage are covered with heat insulating material.

In the aspect, since it is possible to restrict heat transfer with outside, it is easy to control the heat quantity.

A control method according to an aspect of the present disclosure of controlling heat exchange in a fuel cell, which is provided with a power generation unit cooling passage that allows a first circulation pump to circulate a first heat medium so as to cool a power generation unit configured to generate electricity by reacting hydrogen and oxygen, a radiator flow passage that allows a second circulation pump to circulate a second heat medium configured to conduct heat generated by the power generation unit to a radiator, and a heat exchanger configured to perform heat exchange between the first heat medium and the second heat medium, is characterized by comprising: acquiring temperature of the first heat medium on an inlet side of the power generation unit or temperature of the first heat medium on an outlet side of the power generation unit; and controlling output of the first circulation pump or the second circulation pump on the basis of temperature of the first heat medium on the inlet side or the outlet side.

In the aspect, it is possible to control the heat quantity, which is transferred in a heat exchanger, by controlling outputs of the two circulation pumps, that is, the circulation volume on the basis of the temperature. Since the heat quantity taken at a heat exchanger increases as the circulation volume of the radiator flow passage becomes larger, it is possible to finely control the heat quantity by suitably combining outputs of the two pumps. A time lag, which is generated by switching between a closed loop and a radiator passage in a fuel cell of Patent Literature 1, is not generated.

In addition, since it is possible to manage the temperature difference of cooling water between the input side and the output side of the power generation unit, it is possible to stabilize the temperature of the power generation unit even under low-temperature environment.

A computer program according to an aspect of the present disclosure is characterized by causing a computer, which controls heat exchange in a fuel cell provided with a power generation unit cooling passage that allows a first circulation pump to circulate a first heat medium so as to cool a power generation unit configured to generate electricity by reacting hydrogen and oxygen, a radiator flow passage that allows a second circulation pump to circulate a second heat medium configured to conduct heat generated by the power generation unit to a radiator, and a heat exchanger configured to perform heat exchange between the first heat medium and the second heat medium, to execute processing of: acquiring temperature of the first heat medium on an inlet side of the power generation unit or temperature of the first heat medium on an outlet side of the power generation unit; and controlling output of the first circulation pump or the second circulation pump on the basis of temperature of the first heat medium on the inlet side or the outlet side.

In the aspect, it is possible to control the heat quantity, which is transferred in a heat exchanger, by controlling outputs of the two circulation pumps, that is, the circulation volume on the basis of the temperature. Since the heat quantity taken at a heat exchanger increases as the circulation volume of a radiator flow passage becomes larger, it is possible to finely control the heat quantity by suitably combining outputs of the two pumps. A time lag, which is generated by switching between a closed loop and a radiator passage in a fuel cell of Patent Literature 1, is not generated.

In addition, since it is possible to manage the temperature difference of cooling water between the input side and the output side of the power generation unit, it is possible to stabilize the temperature of the power generation unit even under low-temperature environment.

The present invention is not limited to the contents of Embodiments 1 and 2 described above, and various modifications can be made within the scope indicated by the appended claims. That is, embodiments to be obtained by combining technical measures obtained from suitable modifications within the scope indicated by the claims are also included in the technical scope of the present invention.

### [Reference Signs List]

- 1: Stack
- 2: Hydrogen Conduction Passage
- 26: Hydrogen Circulation Pump
- 3: Air Flow Passage
- 30: Air Pump
- 4: Stack Cooling Passage
- 40: Cooling Pump (First Circulation Pump)
- 41: Temperature Sensor (Second Temperature Detector)
- 42: Temperature Sensor (First Temperature Detector)
- 43: Ion Exchange Resin
- 44: Conductivity Meter
- 5: Radiator flow passage
- 50: Heat Radiation Pump (Second Circulation Pump)
- 51: Radiator
- 52: Fan
- 6: Cylinder Heating Passage
- 60: Heating Pump
- 7: First Heat Exchange Unit
- 70, 80: Heat Exchanger
- 81: Heater
- 9: Control Unit
- 90: CPU
- 10: Hydrogen Detection Sensor
- 100: Cell Body
- 200: Hydrogen Supply Unit
- 20: MH Cylinder
- 21 300, 301: Regulator

## Claims

1. A fuel cell (300,301) comprising:
a power generation unit cooling passage (4) configured to cool a power generation unit (1), which generates electricity by reacting hydrogen and oxygen, by circulation of a first heat medium;
a radiator flow passage (5), which allows a second heat medium to flow through a radiator (51)and circulate;
a first circulation pump (40) provided at the power generation unit cooling passage (4);
a second circulation pump (50) provided at the radiator flow passage (5);
a heat exchanger (7) configured to perform heat exchange between the first heat medium and the second heat medium;
a first temperature detector (42) configured to detect temperature of the first heat medium on an inlet side of the power generation unit (1); and
a second temperature detector (41) configured to detect temperature of the first heat medium on an outlet side of the power generation unit (1), wherein the fuel cell (300,301) is constructed in a manner such that output of the first circulation pump (40) or the second circulation pump (50) is controlled on the basis of temperature detected by the first temperature detector (42) or the second temperature detector(41) and a flow rate of the second heat medium to be sent out from the second circulation pump (50) is decreased if the temperature of the first heat medium detected by the second temperature detector (41) is equal to or lower than a predetermined value, **characterized by** further comprising a fan (52) configured to cool the radiator (51), perform ventilation of a housing of the cell body (100), and dilute and discharge hydrogen if hydrogen leaks,
wherein the fuel cell (300,301) further comprises a hydrogen sensor (10) configured to detect leakage of hydrogen, wherein the fuel cell (300,301) is configured that the fan (52) continues rotating and the first circulation pump (40) and the second circulation pump (50) stop if the hydrogen sensor (10) detects leakage of hydrogen.

2. The fuel cell (300,301) according to Claim 1, wherein the fan (52) rotates when the power generation unit (1) is generating electricity.

3. The fuel cell (300,301)according to any one of Claims 1 or 2, wherein the power generation unit cooling passage(4), the heat exchanger (7)and the radiator flow passage (5)are covered with heat insulating material.

4. A control method of controlling heat exchange in a fuel cell, (300,301) according to one of claims 1 to 3, which is provided with a power generation unit cooling passage (4) that allows a first circulation pump (40) to circulate a first heat medium so as to cool a power generation unit (1) configured to generate electricity by reacting hydrogen and oxygen, a radiator flow passage (5) that allows a second circulation pump (50) to circulate a second heat medium configured to conduct heat generated by the power generation unit (1) to a radiator (51), a heat exchanger (7) configured to perform heat exchange between the first heat medium and the second heat medium, the control method, a fan (52) configured to cool the radiator (51), perform ventilation of a housing of the cell body (100), and dilute and discharge hydrogen if hydrogen leaks, and a hydrogen sensor (10) configured to detect leakage of hydrogen, wherein the method comprises:
acquiring temperature of the first heat medium on an inlet side of the power generation unit (1) or temperature of the first heat medium on an outlet side of the power generation unit (1);
controlling output of the first circulation pump (40) or the second circulation pump (50) on the basis of temperature of the first heat medium on the inlet side or the outlet side; and
decreasing output of the second circulation pump (50) if the temperature of the first heat medium on the outlet side is equal to or lower than a predetermined value, in controlling the output of the second circulation pump (50); and continuing rotating the fan (52) and stopping the first circulation pump (40) and the second circulation pump (50) if the hydrogen sensor (10) detects leakage of hydrogen.

## Patentansprüche

1. Eine Brennstoffzelle (300, 301), umfassend:
einen Stromerzeugungseinheit-Kühlkanal (4), der dazu konfiguriert ist, eine Stromerzeugungseinheit (1), die Elektrizität durch Umsetzen von Wasserstoff und Sauerstoff erzeugt, durch Zirkulation eines ersten Wärmemediums zu kühlen;
einen Kühler-Strömungskanal (5), der es einem zweiten Wärmemedium ermöglicht, durch einen Kühler (51) zu strömen und zu zirkulieren;
eine erste Zirkulationspumpe (40), die an dem Stromerzeugungseinheit-Kühlkanal (4) bereitgestellt ist;
eine zweite Zirkulationspumpe (50), die an dem Kühler-Strömungskanal (5) bereitgestellt ist;
einen Wärmetauscher (7), der dazu konfiguriert ist, einen Wärmeaustausch zwischen dem ersten Wärmemedium und dem zweiten Wärmemedium durchzuführen;
einen ersten Temperaturdetektor (42), der dazu konfiguriert ist, eine Temperatur des ersten Wärmemediums auf einer Einlassseite der Stromerzeugungseinheit (1) zu erfassen; und
einen zweiten Temperaturdetektor (41), der dazu konfiguriert ist, eine Temperatur des ersten Wärmemediums auf einer Auslassseite der Stromerzeugungseinheit (1) zu erfassen, wobei die Brennstoffzelle (300, 301) auf eine solche Weise aufgebaut ist, dass eine Ausgabe der ersten Umwälzpumpe (40) oder der zweiten Umwälzpumpe (50) auf der Grundlage einer Temperatur, die durch den ersten Temperaturdetektor (42) oder den zweiten Temperaturdetektor (41) erfasst wird, gesteuert wird und eine Strömungsrate des zweiten Wärmemediums, das aus der zweiten Zirkulationspumpe (50) ausgegeben werden soll, verringert wird, wenn die Temperatur des ersten Wärmemediums, die durch den zweiten Temperaturdetektor (41) erfasst wird, gleich oder niedriger als ein vorbestimmter Wert ist, **dadurch gekennzeichnet, dass** sie ferner ein Gebläse (52) enthält, das dazu konfiguriert ist, den Kühler (51) zu kühlen, eine Belüftung eines Gehäuses des Zellenkörpers (100) durchzuführen und Wasserstoff zu verdünnen und abzugeben, wenn Wasserstoff austritt,
wobei die Brennstoffzelle (300, 301) ferner einen Wasserstoffsensor (10) enthält, der dazu konfiguriert ist, ein Austreten von Wasserstoff zu erfassen, wobei die Brennstoffzelle (300, 301) so konfiguriert ist, dass sich das Gebläse (52) weiter dreht und die erste Umwälzpumpe (40) und die zweite Umwälzpumpe (50) stoppen, wenn der Wasserstoffsensor (10) ein Austreten von Wasserstoff erfasst.

2. Die Brennstoffzelle (300, 301) gemäß Anspruch 1, wobei sich das Gebläse (52) dreht, wenn die Stromerzeugungseinheit (1) Elektrizität erzeugt.

3. Die Brennstoffzelle (300, 301) gemäß einem der Ansprüche 1 oder 2, wobei der Stromerzeugungseinheit-Kühlkanal (4), der Wärmetauscher (7) und der Kühler-Strömungskanal (5) mit wärmeisolierendem Material bedeckt sind.

4. Ein Steuerverfahren zum Steuern eines Wärmeaustauschs in einer Brennstoffzelle (300, 301) gemäß einem der Ansprüche 1 bis 3, die versehen ist mit einem Stromerzeugungseinheit-Kühlkanal (4), der es einer ersten Umwälzpumpe (40) ermöglicht, ein erstes Wärmemedium umzuwälzen, um eine Stromerzeugungseinheit (1) zu kühlen, die dazu konfiguriert ist, Elektrizität durch Umsetzen von Wasserstoff und Sauerstoff zu erzeugen, einem Kühler-Strömungskanal (5), der es einer zweiten Umwälzpumpe (50) ermöglicht, ein zweites Wärmemedium umzuwälzen, das dazu konfiguriert ist, Wärme, die von der Stromerzeugungseinheit (1) erzeugt wird, zu einem Kühler (51) zu leiten, einem Wärmetauscher (7), der dazu konfiguriert ist, einen Wärmeaustausch zwischen dem ersten Wärmemedium und dem zweiten Wärmemedium durchzuführen, dem Steuerverfahren, einem Gebläse (52), das dazu konfiguriert ist, den Kühler (51) zu kühlen, eine Belüftung eines Gehäuses des Zellenkörpers (100) durchzuführen und Wasserstoff zu verdünnen und abzugeben, wenn Wasserstoff austritt, und einem Wasserstoffsensor (10), der dazu konfiguriert ist, ein Austreten von Wasserstoff zu erfassen, wobei das Verfahren umfasst:
Erfassen einer Temperatur des ersten Wärmemediums auf einer Einlassseite der Stromerzeugungseinheit (1) oder einer Temperatur des ersten Wärmemediums auf einer Auslassseite der Stromerzeugungseinheit (1);
Steuern einer Ausgabe der ersten Zirkulationspumpe (40) oder der zweiten Zirkulationspumpe (50) auf der Grundlage einer Temperatur des ersten Wärmemediums auf der Einlassseite oder der Auslassseite; und
Verringern einer Ausgabe der zweiten Umwälzpumpe (50), wenn die Temperatur des ersten Wärmemediums auf der Auslassseite gleich oder niedriger als ein vorbestimmter Wert ist, beim Steuern der Ausgabe der zweiten Umwälzpumpe (50); und Weiterdrehen des Gebläses (52) und Stoppen der ersten Umwälzpumpe (40) und der zweiten Umwälzpumpe (50), wenn der Wasserstoffsensor (10) ein Austreten von Wasserstoff erfasst.

## Revendications

1. Une pile à combustible (300, 301) comprenant :
un passage de refroidissement d'unité de génération d'énergie (4) configuré pour refroidir une unité de génération d'énergie (1), qui génère de l'électricité en faisant réagir de l'hydrogène et de l'oxygène, par circulation d'un premier milieu thermique ;
un passage d'écoulement de radiateur (5), qui permet à un deuxième milieu thermique de s'écouler à travers un radiateur (51) et de circuler ;
une première pompe de circulation (40) prévue au niveau du passage de refroidissement d'unité de génération d'énergie (4) ;
une deuxième pompe de circulation (50) prévue au niveau du passage d'écoulement de radiateur (5) ;
un échangeur de chaleur (7) configuré pour effectuer un échange de chaleur entre le premier milieu thermique et le deuxième milieu thermique ;
un premier détecteur de température (42) configuré pour détecter la température du premier milieu thermique sur un côté d'entrée de l'unité de génération d'énergie (1) ; et
un deuxième détecteur de température (41) configuré pour détecter la température du premier milieu thermique sur un côté de sortie de l'unité de génération d'énergie (1), dans laquelle la pile à combustible (300, 301) est construite de telle sorte que la sortie de la première pompe de circulation (40) ou de la deuxième pompe de circulation (50) est contrôlée sur la base de la température détectée par le premier détecteur de température (42) ou le deuxième détecteur de température (41), et un débit du deuxième milieu thermique à envoyer depuis la deuxième pompe de circulation (50) est diminué si la température du premier milieu thermique détectée par le deuxième détecteur de température (41) est égale ou inférieure à une valeur prédéterminée, **caractérisée en ce qu'**elle comprend en outre un ventilateur (52) configuré pour refroidir le radiateur (51), effectuer la ventilation d'un boîtier du corps de pile (100), et diluer et évacuer l'hydrogène si l'hydrogène fuit,
dans laquelle la pile à combustible (300, 301) comprend en outre un capteur d'hydrogène (10) configuré pour détecter une fuite d'hydrogène, dans laquelle la pile à combustible (300, 301) est configurée de sorte que le ventilateur (52) continue de tourner et la première pompe de circulation (40) et la deuxième pompe de circulation (50) s'arrêtent si le capteur d'hydrogène (10) détecte une fuite d'hydrogène.

2. La pile à combustible (300, 301) selon la revendication 1, dans laquelle le ventilateur (52) tourne lorsque l'unité de génération d'énergie (1) est en train de générer de l'électricité.

3. La pile à combustible (300, 301) selon l'une quelconque des revendications 1 ou 2, dans laquelle le passage de refroidissement d'unité de génération d'énergie (4), l'échangeur de chaleur (7) et le passage d'écoulement de radiateur (5) sont recouverts d'un matériau d'isolation thermique.

4. Un procédé de contrôle pour contrôler l'échange de chaleur dans une pile à combustible (300, 301) selon l'une des revendications 1 à 3, qui est pourvue d'un passage de refroidissement d'unité de génération d'énergie (4) qui permet à une première pompe de circulation (40) de faire circuler un premier milieu thermique afin de refroidir une unité de génération d'énergie (1) configurée pour générer de l'électricité en faisant réagir de l'hydrogène et de l'oxygène, un passage d'écoulement de radiateur (5) qui permet à une deuxième pompe de circulation (50) de faire circuler un deuxième milieu thermique configuré pour conduire la chaleur générée par l'unité de génération d'énergie (1) vers un radiateur (51), un échangeur de chaleur (7) configuré pour effectuer un échange de chaleur entre le premier milieu thermique et le deuxième milieu thermique, le procédé de contrôle, un ventilateur (52) configuré pour refroidir le radiateur (51), effectuer la ventilation d'un boîtier du corps de pile (100), et diluer et évacuer l'hydrogène si l'hydrogène fuit, et un capteur d'hydrogène (10) configuré pour détecter la fuite d'hydrogène, dans lequel le procédé :
l'acquisition de la température du premier milieu thermique sur un côté d'entrée de l'unité de génération d'énergie (1) ou de la température du premier milieu thermique sur un côté de sortie de l'unité de génération d'énergie (1) ;
le contrôle de la sortie de la première pompe de circulation (40) ou de la deuxième pompe de circulation (50) sur la base de la température du premier milieu thermique sur le côté d'entrée ou le côté de sortie ; et
la diminution de la sortie de la deuxième pompe de circulation (50) si la température du premier milieu thermique sur le côté de sortie est égale ou inférieure à une valeur prédéterminée, lors du contrôle de la sortie de la deuxième pompe de circulation (50) ; et la poursuite de la rotation du ventilateur (52) et l'arrêt de la première pompe de circulation (40) et de la deuxième pompe de circulation (50) si le capteur d'hydrogène (10) détecte une fuite d'hydrogène.
